(19) Europäisches Patentamt
European Patent Office
Office européen des brevets

(11) **EP 4 564 329 B1**

(12) **EUROPEAN PATENT SPECIFICATION**

(45) Date of publication and mention
of the grant of the patent:
**31.12.2025 Bulletin 2026/01**

(21) Application number: **24203307.4**

(22) Date of filing: **27.09.2024**

(51) International Patent Classification (IPC):
*G08G 1/16* (2006.01)    *G08G 1/0967* (2006.01)
*G06N 3/0455* (2023.01)    *G06N 3/044* (2023.01)
*G06N 3/045* (2023.01)    *G06N 3/08* (2023.01)
*G06N 3/088* (2023.01)

(52) Cooperative Patent Classification (CPC):
**G08G 1/167; G06N 3/044; G06N 3/045;
G06N 3/0455; G06N 3/08; G06N 3/088;
G08G 1/096791**

(54) **SYSTEMS AND METHODS FOR VEHICLE MANEUVER PREDICTION USING DEEP LEARNING**

SYSTEME UND VERFAHREN ZUR FAHRZEUGMANÖVERVORHERSAGE UNTER VERWENDUNG
VON TIEFENLERNEN

SYSTÈMES ET PROCÉDÉS DE PRÉDICTION DE MANOEUVRE DE VÉHICULE À L'AIDE D'UN
APPRENTISSAGE PROFOND

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.11.2023 IN 202321080691**

(43) Date of publication of application:
**04.06.2025 Bulletin 2025/23**

(73) Proprietor: **Tata Consultancy Services Limited
Maharashtra (IN)**

(72) Inventors:
• **SATHY, SRUTHI**
**600113 Chennai, Tamil Nadu (IN)**
• **SANKARANARAYANAN, PANDEESWARI**
**600113 Chennai, Tamil Nadu (IN)**
• **RAMANUJAM, ARVIND**
**600113 Chennai, Tamil Nadu (IN)**
• **JAYAPRAKASH, RAJESH**
**600113 Chennai, Tamil Nadu, (IN)**

(74) Representative: **Goddar, Heinz J.
Boehmert & Boehmert
Anwaltspartnerschaft mbB
Pettenkoferstrasse 22
80336 München (DE)**

(56) References cited:
**EP-A1- 4 009 300    JP-A- 2006 085 285**

• **SANKARANARAYANAN PANDEESWARI ET AL:
"Predicut - A Machine Learning Model For Online
Prediction of Cut-In Manoeuvre For Autonomous
Vehicles", 2023 IEEE 97TH VEHICULAR
TECHNOLOGY CONFERENCE (VTC2023-
SPRING), IEEE, 20 June 2023 (2023-06-20), pages
1 - 5, XP034397141, DOI: 10.1109/VTC2023-
SPRING57618.2023.10199227**
• **ZHU XIANGLEI ET AL: "Interaction-Aware Cut-In
Trajectory Prediction and Risk Assessment in
Mixed Traffic", IEEE/CAA JOURNAL OF
AUTOMATICA SINICA, CHINESE ASSOCIATION
OF AUTOMATION (CAA), vol. 9, no. 10, 1 October
2022 (2022-10-01), pages 1752 - 1762,
XP011919766, ISSN: 2329-9266, [retrieved on
20220914], DOI: 10.1109/JAS.2022.105866**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

TECHNICAL FIELD

The disclosure herein generally relates to the field of vehicle maneuver prediction, and, more particularly, to systems and methods for vehicle maneuver prediction using deep learning.

BACKGROUND

In a vehicle driving scenario, human drivers perform safe and unsafe lane maneuvers which may result into accidents. Different levels of automation, from advanced cruise control to automated motion planning help reduce accidents by anticipating risks on the road and working to avoid them. An improved safety provided by autonomous vehicles systems can potentially reduce crashes. They do so by using sensor networks and machine learning to predict driver behavior and take appropriate countermeasures to avoid accidents. In future, the autonomous vehicles have to share the road with human-driven vehicles. However, decision errors by human drivers during maneuvers such as illegal maneuvers, misjudgment of gaps or others speed, and poor direction control may result in crashes. Autonomous vehicles therefore have to predict human-initiated safe and unsafe maneuvers to react appropriately for the safety and comfort of its passengers.

The document EP4009300 discloses a method for automatic control of a vehicle, a method for vehicle lane change intention prediction, a method for training lane change intention prediction network, a apparatus for vehicle lane change intention prediction, an apparatus for vehicle automatic control, an apparatus for training lane change intention prediction network, and an electronic device using artificial intelligence.

SUMMARY

Embodiments of the present disclosure present technological improvements as solutions to one or more of the above-mentioned technical problems recognized by the inventors in conventional systems. For example, in one embodiment, a processor implemented method is provided. The processor implemented method, comprising perceiving, via one or more hardware processors, a surrounding environment of an autonomous vehicle to identify one or more surrounding vehicles and a target vehicle from the one or more surrounding vehicles; determining, via the one or more hardware processors, (i) a set of input features for the target vehicle with respect to the autonomous vehicle for an observation time window using a plurality of driving and sensor related information of the autonomous vehicle and the target vehicle, and (ii) a set of classes of maneuvers for the target vehicle with respect to the autonomous vehicle, wherein the set of classes of maneuvers comprises a non-incident maneuver defined by the target vehicle keeping a different lane than the autonomous vehicle, Lane change to Left (LCL), the Lane change to Right (LCR), Cut-in to Left (CTL) and Cut-in to Right (CTR), and wherein each class from the set of classes of maneuvers corresponds to a specific condition from a set of conditions; training, via the one or more hardware processors, a stacked autoencoder based singular deep neural network using the set of input features and the set of classes of maneuvers, wherein a stacked autoencoder is used to initialize a plurality of weights and a plurality of biases of each layer of the stacked autoencoder based singular deep neural network; predicting, via the one or more hardware processors, a maneuver from the set of classes of maneuvers to be performed by the target vehicle with respect to the autonomous vehicle within a prediction time window using the stacked autoencoder based singular deep neural network, wherein the prediction time window is indicative of a time interval between a time when the prediction is made and actual time of occurrence of the maneuver; determining in real time, via the one or more hardware processors, an outcome of a rule from a set of rules corresponding to a predicted maneuver from the set of predicted maneuvers of the target vehicle wherein the set of rules comprises: (a) occurrence of a safe event when the corresponding predicted maneuver is at least one of: (i) the Lane change to Left and (ii) the Lane change to Right; (b) occurrence of a non-safe event suggesting applying brakes when the corresponding predicted maneuver is at least one of: (i) the Cut-in to Left and (ii) the Cut-in to Right; and (c) computing the set of input features for the target vehicle with respect to each surrounding vehicle from the one or more surrounding vehicles for the observation time window when the corresponding predicted maneuver is the non-incident maneuver; predicting, via the one or more hardware processors, a maneuver from the set of classes of maneuvers to be performed by the target vehicle with respect to each surrounding vehicle from the one or more surrounding vehicles within a prediction time window using the stacked autoencoder based singular deep neural network; and communicating, via the one or more hardware processors, the predicted maneuver from the set of classes of maneuvers to be performed by the target vehicle with respect to each surrounding vehicle from the one or more surrounding vehicles from the autonomous vehicle to each surrounding vehicle using a vehicle-to-vehicle connection.

In another aspect, a system is provided. The system comprising a memory storing instructions; one or more communication interfaces; and one or more hardware processors coupled to the memory via the one or more communication interfaces, wherein the one or more hardware processors are configured by the instructions to: perceive a surrounding environment of an autonomous vehicle to identify one or more surrounding vehicles and a target vehicle from the one or more surrounding vehicles; determine (i) a set of input features for the target vehicle with respect to the autonomous vehicle for an observation time window using a plurality of driving and sensor related information of the autonomous vehicle and the target vehicle, and (ii) a set of classes of maneuvers for the target vehicle with respect to the autonomous vehicle, wherein the set of classes of maneuvers comprises a non-incident maneuver defined by the target vehicle keeping a different lane than the autonomous vehicle, lane change to left, lane change to right, cut-in to left and cut-in to right, and wherein each class from the set of classes of maneuvers corresponds to a specific condition from a set of conditions; train a stacked autoencoder based singular deep neural network using the set of input features and the set of classes of maneuvers, wherein a stacked autoencoder is used to initialize a plurality of weights and a plurality of biases of each layer of the stacked autoencoder based singular deep neural network; predict a maneuver from the set of classes of maneuvers to be performed by the target vehicle with respect to the autonomous vehicle within a prediction time window using the stacked autoencoder based singular deep neural network, wherein the prediction time window is indicative of a time interval between time when the prediction is made and actual time of occurrence of the maneuver; determine in real time, an outcome of a rule from a set of rules corresponding to a predicted maneuver from the set of predicted maneuvers of the target vehicle where in the set of rules comprises: (a) occurrence of a safe event when the corresponding predicted maneuver is at least one of: (i) the Lane change to Left (LCL) and (ii) the Lane change to Right (LCR); (b) occurrence of a non-safe event suggesting applying brakes when the corresponding predicted maneuver is at least one of: (i) the Cut-in to Left (CTL) and (ii) the Cut-in to Right(CTR); and (c) computing the set of input features for the target vehicle with respect to each surrounding vehicle from the one or more surrounding vehicles for the observation time window when the corresponding predicted maneuver is the non-incident maneuver; predict a maneuver from the set of classes of maneuvers to be performed by the target vehicle with respect to each surrounding vehicle from the one or more surrounding vehicles within a prediction time window using the stacked autoencoder based singular deep neural network; and communicate the predicted maneuver from the set of classes of maneuvers to be performed by the target vehicle with respect to each surrounding vehicle from the one or more surrounding vehicles from the autonomous vehicle to each surrounding vehicle using a vehicle-to-vehicle connection.

In yet another aspect, a non-transitory computer readable medium is provided. The non-transitory computer readable medium are configured by instructions for perceiving, a surrounding environment of an autonomous vehicle to identify one or more surrounding vehicles and a target vehicle from the one or more surrounding vehicles; determining, (i) a set of input features for the target vehicle with respect to the autonomous vehicle for an observation time window using a plurality of driving and sensor related information of the autonomous vehicle and the target vehicle, and (ii) a set of classes of maneuvers for the target vehicle with respect to the autonomous vehicle, wherein the set of classes of maneuvers comprises a non-incident maneuver defined by the target vehicle keeping a different lane than the autonomous vehicle, Lane change to Left (LCL), the Lane change to Right (LCR), Cut-in to Left (CTL) and Cut-in to Right (CTR), and wherein each class from the set of classes of maneuvers corresponds to a specific condition from a set of conditions; training, a stacked autoencoder based singular deep neural network using the set of input features and the set of classes of maneuvers, wherein a stacked autoencoder is used to initialize a plurality of weights and a plurality of biases of each layer of the stacked autoencoder based singular deep neural network; predicting, a maneuver from the set of classes of maneuvers to be performed by the target vehicle with respect to the autonomous vehicle within a prediction time window using the stacked autoencoder based singular deep neural network, wherein the prediction time window is indicative of a time interval between a time when the prediction is made and actual time of occurrence of the maneuver; determining in real time, an outcome of a rule from a set of rules corresponding to a predicted maneuver from the set of predicted maneuvers of the target vehicle wherein the set of rules comprises: (a) occurrence of a safe event when the corresponding predicted maneuver is at least one of: (i) the Lane change to Left and (ii) the Lane change to Right; (b) occurrence of a non-safe event suggesting applying brakes when the corresponding predicted maneuver is at least one of: (i) the Cut-in to Left and (ii) the Cut-in to Right; and (c) computing the set of input features for the target vehicle with respect to each surrounding vehicle from the one or more surrounding vehicles for the observation time window when the corresponding predicted maneuver is the non-incident maneuver; predicting, a maneuver from the set of classes of maneuvers to be performed by the target vehicle with respect to each surrounding vehicle from the one or more surrounding vehicles within a prediction time window using the stacked autoencoder based singular deep neural network; and communicating, the predicted maneuver from the set of classes of maneuvers to be performed by the target vehicle with respect to each surrounding vehicle from the one or more surrounding vehicles from the autonomous vehicle to each surrounding vehicle using a vehicle-to-vehicle connection.

In accordance with an embodiment of the present disclosure, the set of input features comprises range, range rate, transversal, speed, and yaw angle.

In accordance with an embodiment of the present disclosure, the set of conditions for determining the set of classes of maneuvers for the autonomous vehicle and each surrounding vehicle include: (a) selecting the cut-in to right maneuver when a lane identity value at a current time is greater than the lane identity value at a previous time and the lane identity value of the autonomous vehicles and the target vehicle are same at the current time and a parameter indicative of division of the range by the range rate is less than a predefined threshold value; (b) selecting the lane change to right maneuver when the lane identity value at the current time is greater than the lane identity value at the previous time and the lane identity value of the autonomous vehicles and the target vehicle are same at the current time and the parameter indicative of division of the range by the range rate exceeds the predefined threshold value; (c) selecting the cut-in to left maneuver when the lane identity value at the current time is lesser than the lane identity value at the previous time and the lane identity value of the autonomous vehicles and the target vehicle are same at the current time and the parameter indicative of division of the range by the range rate is less than the predefined threshold value; (d) selecting the lane change to left maneuver when lane identity value at the current time is lesser than the lane identity value at the previous time and the lane identity value of the autonomous vehicles and the target vehicle are same at the current time and the parameter indicative of division of the range by the range rate exceeds the predefined threshold value; and (e) selecting the non-incident maneuver when the lane identity of the autonomous vehicle is not equal to the lane identity of the target vehicle at the current time.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for vehicle maneuver prediction using deep learning, according to some embodiments of the present disclosure.
FIGS. 2A and 2B illustrate an exemplary flow diagram illustrating a method for vehicle maneuver prediction using deep learning, using the system of FIG. 1, in accordance with some embodiments of the present disclosure.
FIGS. 3A through 3I depict diagrams illustrating spatial views for the set of classes of maneuver, according to some embodiments of the present disclosure.
FIG. 4 illustrates a functional block diagram of architecture of the stacked autoencoder based singular deep neural network, according to some embodiments of the present disclosure.
FIG. 5 depicts an example of communication using the vehicle-to-vehicle connection, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

Autonomous vehicle systems provide improved safety in comparison to human driven vehicles by reducing crashes. However, in future scenarios, the autonomous vehicles have to share the road with human-driven vehicles. But human drivers make decision errors during maneuvers such as illegal maneuvers, misjudgment of gaps or others speed, and poor direction control which may result in crashes. Autonomous vehicles therefore have to predict human-initiated safe and unsafe maneuvers to react appropriately for the safety and comfort of its passengers. The present disclosure addresses unresolved problems of the conventional autonomous vehicle systems by providing a deep neural network model that uses sensor data to predict if any vehicle within its field of view would perform safe or unsafe lane maneuvers into its headway or into any other vehicle's headway in the next 0.5 to 5 seconds. The method of the present disclosure also helps surrounding vehicles to know intention of a target vehicle with the help of vehicle-to-vehicle communication systems in a road driving environment.

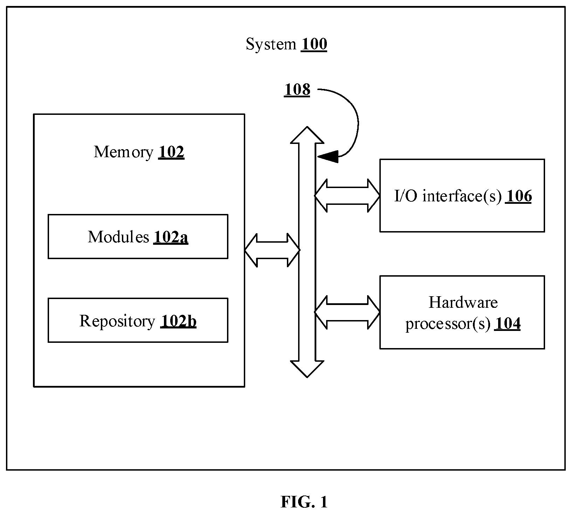

Referring now to the drawings, and more particularly to FIGS. 1 through 5, where similar reference characters denote corresponding features consistently throughout the figures, there are shown preferred embodiments and these embodiments are described in the context of the following exemplary system and/or method.

FIG. 1 illustrates an exemplary system for vehicle maneuver prediction using deep learning according to some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions processors and hardware processors may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

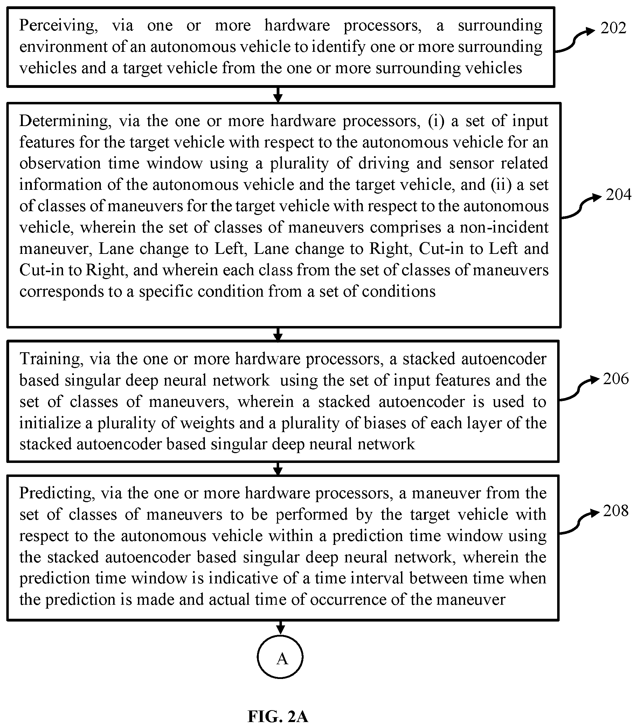

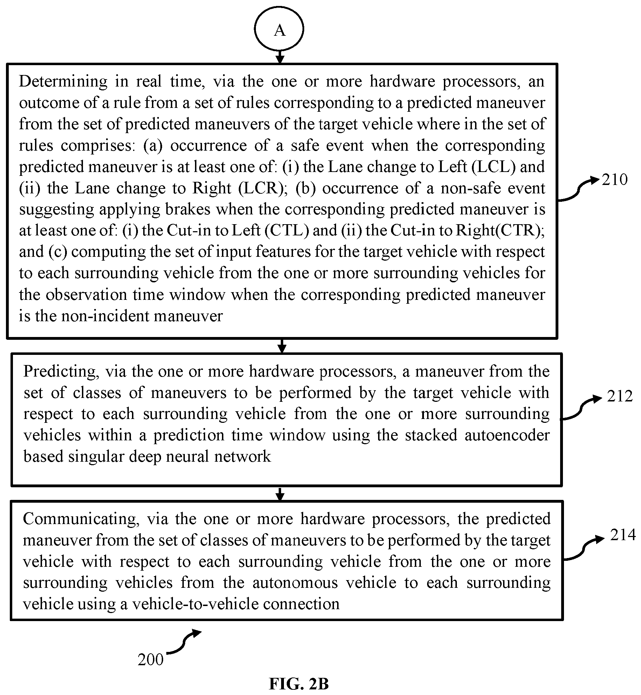

Embodiments of the present disclosure provide systems and methods for vehicle maneuver prediction using deep learning. In context of the present disclosure, the expressions 'autonomous vehicle', and 'host' may be interchangeably used throughout the description. FIGS. 2A and 2B, with reference to FIG. 1, illustrate an exemplary flow diagram illustrating a method for vehicle maneuver prediction using deep learning, using the system of FIG. 1, in accordance with some embodiments of the present disclosure.

Referring to FIGS. 2A and 2B, in an embodiment, the system(s) 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, the flow diagram as depicted in FIGS. 2A and 2B, and one or more examples. Although steps of the method 200 including process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

In an embodiment, at step 202 of the present disclosure, the one or more hardware processors are configured to perceive a surrounding environment of an autonomous vehicle to identify one or more surrounding vehicles and a target vehicle from the one or more surrounding vehicles. In an embodiment, the autonomous vehicle is equipped with the sensors to track other vehicles around it and referred as the host vehicle. The vehicles around the host vehicle are called surrounding vehicles. The surrounding vehicle whose behavior is being predicted is called the target vehicle. It is assumed that the host vehicle's sensor data is augmented by vehicle to everything (V2X) and Dedicated Short Range Communication (DSRC) so that it can track vehicles up to seven adjacent lanes and vehicles up to 70 meters ahead and behind the host vehicle.

Further, at step 204 of the present disclosure, the one or more hardware processors are configured to determine (i) a set of input features for the target vehicle with respect to the autonomous vehicle for an observation time window using a plurality of driving and sensor related information of the autonomous vehicle and the target vehicle, and (ii) a set of classes of maneuvers for the target vehicle with respect to the autonomous vehicle. The observation time window indicates a range of time between a start time and a prediction time which is configurable and depicted as $t_o = [T_s, T_p]$. In the context of the present disclosure, a plurality of events that are encountered by multiple vehicles while doing multiple trips along different roads in a city were extracted from two datasets named HighD and NGSIM I-80 datasets. After analysis and processing of the datasets, the set of input features are extracted. The set of input features comprises range, range rate, transversal, speed, and yaw angle. The range refers to a longitudinal position of the target vehicle relative to the host vehicle. The range rate refers to a longitudinal velocity of the target vehicle relative to the host vehicle. The transversal refers to a lateral position of the target vehicle relative to the host vehicle. The speed refers to speed of the host vehicle. The yaw angle refers to an angle between a direction the target vehicle is moving and the longitudinal axis of the target vehicle.

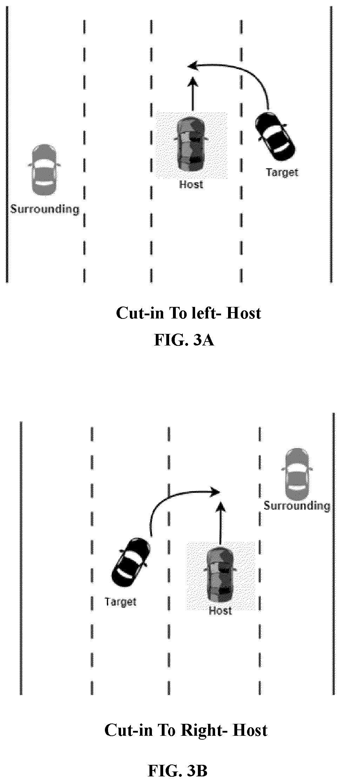

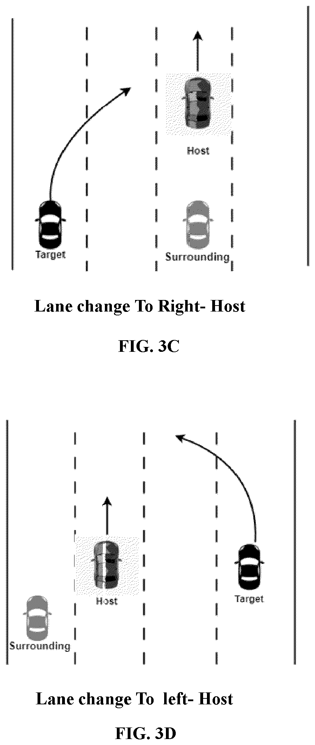

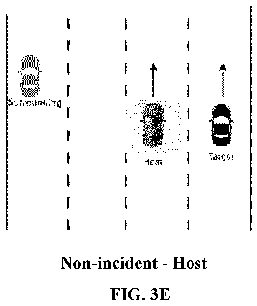

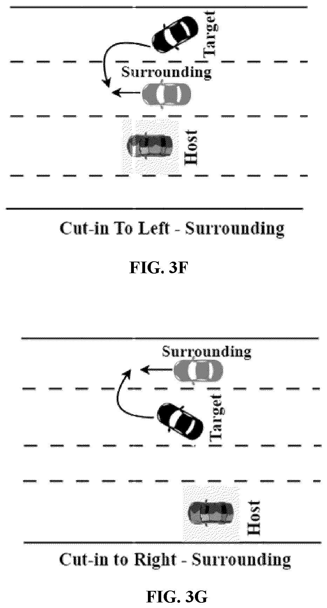

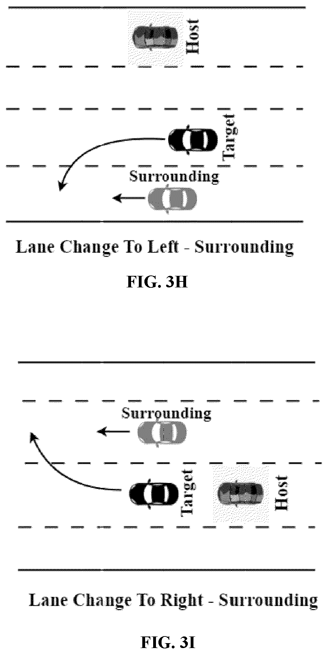

The set of classes of maneuvers comprises a non-incident maneuver, Lane change to Left, Lane change to Right, Cut-in to Left and Cut-in to Right. The non-incident maneuver indicates that the target vehicle continues to proceed without performing any unsafe maneuver with respect to the autonomous vehicle. The Lane change to Left indicates that the target vehicle performs a safe maneuver to move to its left lane. The Lane change to Right indicates that the target vehicle performs a safe maneuver to move to its right lane. The cut-in to left indicates that the target vehicle cuts into its left lane in front of another vehicle. The cut-in to right indicates that the target vehicle cuts into its right lane in front of another vehicle. Cut-in is a rare maneuver where the target vehicle tries to cut in front of another vehicle suddenly while not following any lane change procedures or rules. FIGS. 3A through 3I depict diagram illustrating spatial views for the set of classes of maneuver, according to some embodiments of the present disclosure. As can be seen in FIGS. 3A through 3I, the spatial view for the set of classes of maneuver for the target vehicle is shown with respect to the host vehicle and a surrounding vehicle. In an embodiment, each class from the set of classes of maneuvers corresponds to a specific condition from a set of conditions. The set of conditions for determining the set of classes of maneuvers for the autonomous vehicle and each surrounding vehicle includes: (a) selecting the cut-in to right maneuver when a lane identity value at a current time is greater than the lane identity value at a previous time and the lane identity value of the autonomous vehicles and the target vehicle are same at the current time and a parameter indicative of division of the range by the range rate is less than a predefined threshold value; (b) selecting the lane change to right maneuver when the lane identity value at the current time is greater than the lane identity value at the previous time and the lane identity value of the autonomous vehicles and the target vehicle are same at the current time and the parameter indicative of division of the range by the range rate exceeds the predefined threshold value; (c) selecting the cut-in to left maneuver when the lane identity value at the current time is lesser than the lane identity value at the previous time and the lane identity value of the autonomous vehicles and the target vehicle are same at the current time and the parameter indicative of division of the range by the range rate is less than the predefined threshold value; (d) selecting the lane change to left maneuver when the lane identity value at the current time is lesser than the lane identity value at the previous time and the lane identity value of the autonomous vehicles and the target vehicle are same at the current time and the parameter indicative of division of the range by the range rate exceeds the predefined threshold value; and (e) selecting the non-incident maneuver when the lane identity of the autonomous vehicle is not equal to the lane identity of the target vehicle at the current time. In an embodiment, the predefined threshold value is 3.

In an embodiment, the step for determining the set of classes of maneuvers can be further better understood by way of following pseudo code provided as example:

```
for each host_vehicle do
        for each surrounding_vehicle do
                if lane_id of surrounding_vehicle at current time > lane_id of
        surrounding_vehicle at previous time and lane_id of surrounding_vehicle at
        current time = lane_id of host at current time then
                        if range/range rate < 3  then
                                right_cut-in
                        else
                                right_lane_change
                        end if
                else if lane_id of surrounding_vehicle at current time < lane_id
        of surrounding_vehicle at previous time and lane_id of surrounding_vehicle at
        current time = lane_id of host at current time then

                        if range/range rate < 3  then
                                left_cut-in
                        else
                                left_lane_change
                        end if
                else if lane_id of surrounding_vehicle at the current time ≠
        lane_id of host at current time then
                                non-incident maneuver
                end if
        end for
end for
```

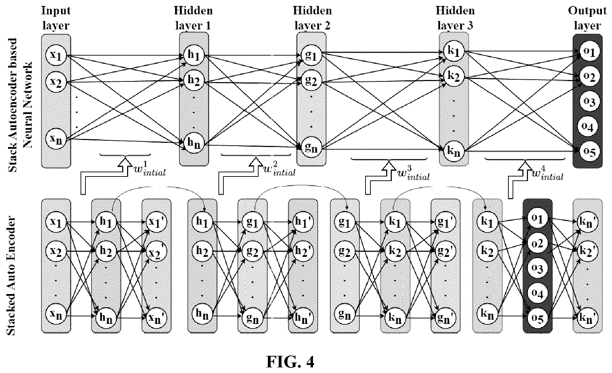

Further, at step 206 of the present disclosure, the one or more hardware processors 104 are configured to train, a stacked autoencoder based singular deep neural network using the set of input features and the set of classes of maneuvers. FIG. 4, with reference to FIGS. 1 and 2B, illustrates a functional block diagram of architecture of the stacked autoencoder based singular deep neural network, according to some embodiments of the present disclosure. As shown in FIG. 4, the stacked autoencoder based singular deep neural network comprise five layers. A number of neurons in input layers of the stacked autoencoder based singular deep neural network ranges from 50 to 375 depending on the observation window. The number of neurons in hidden layers and output layer of the stacked autoencoder based singular deep neural network is 64-32-16-5. In an embodiment, a stacked autoencoder is used to initialize a plurality of weights and a plurality of biases of each layer of the stacked autoencoder based singular deep neural network. Output of previous autoencoder's hidden layer is fed to next auto-encoder's input layer. After training, four networks of the stacked autoencoder provide the initial weights and biases for each layer of the stacked autoencoder based singular deep neural network. When trained with a large dataset, the deep neural networks (DNNs) provide better prediction accuracy over shallow neural networks over unseen testing datasets. However, DNNs suffer from vanishing gradient problem and tend to get trapped in local minima. In order to address the issue of relatively small dataset in training a DNN, the stacked auto-encoder is used to pre-train the weights and biases of each layer in the stacked autoencoder based singular deep neural network. This also helps to overcome a vanishing gradient problem by utilizing dropout.

At step 208 of the present disclosure, the one or more hardware processors 104 are configured to predict a maneuver from the set of classes of maneuvers to be performed by the target vehicle with respect to the autonomous vehicle within a prediction time window using the stacked autoencoder based singular deep neural network. The prediction time window is indicative of a time interval between a time when the prediction is made and actual time of occurrence of the maneuver. The prediction time window is denoted by $t_p = [T_p, T_m]$, where $T_p$ refers to the prediction time or a time when the prediction for the maneuver to be performed by the target vehicle is made and $T_m$ refers to the actual time of occurrence of the maneuver. In the context of the present disclosure, the maneuver to be performed by the target vehicle is predicted even before its occurrence with the help of the stacked autoencoder based singular deep neural network.

In an embodiment, the step 208 is better understood by way of the following description provided as exemplary explanation.

For each host vehicle, the target vehicle's features are determined and given as input to the stacked autoencoder based singular deep neural network. The output of the stacked autoencoder based singular deep neural network consists of 5 neurons with Softmax activation function. The 5 output neurons correspond to the 5 maneuver classes. The five input features for each target vehicle were sampled at 10Hz. Based on the length of $t_o$, the number of neurons in the input layers ranges from 50 to 375. The second, third, and fourth layers have 64, 32, 16 neurons respectively. The output layer has five neurons corresponding to the five maneuver scenarios Rectified Linear Unit (ReLU) is the activation function at all intermediate layers, while Softmax is used for the output layer. The mean-square error (MSE) function is used as the loss function for the stacked auto-encoder and provided in equation (1) below as:

$$MSE = \frac{1}{n}\sum(x_i - x_i')^2 \ (1)$$

Here, $x_i$ are the input features and $x_i'$ are the output features.

For, the stacked autoencoder based singular deep neural network, a categorical cross entropy (CE) is used as the loss function and provided in equation (2) below as:

$$CE = -\sum_{i=1}^{C} t_i \log\big(f(s_i)\big) \ (2)$$

Here, $f(s_i)$ represents a Softmax function which is defined as shown in equation (3) below:

$$f(s_i) = \frac{e^{s_i}}{\sum_{j=1}^{C} e^{s_j}} \ (3)$$

Here, s is the input vector and C is the number of scenarios.

The output of the previous auto-encoder's hidden layer is fed to the next auto-encoder's input. After training, the stacked autoencoder comprising four auto-encoder networks provide the initial weights and biases for the layers of the stacked autoencoder based singular deep neural network as shown in the FIG. 4. The initialized stacked autoencoder based singular deep neural network is then subsequently trained using the Adam optimizer.

Thus, for a vector of features $X(T)$ of a target vehicle captured it is predicted if the target vehicle would perform one of the maneuvers from the set of class of maneuvers at a time $Tm > Tp$ with respect to the host vehicle. Let $O$ be the output vector $O(I_{LK}, I_{LCL}, R, I_{CTL}, I_{CTR})$ with each element being an indicator variable corresponding to the maneuvers. Therefore, given a set $F$ of observations recorded every x seconds and represented by $F(T_s, T_p) = X(T_s), X(T_s + x), X(T_s + 2x),..., X(T_p)$, the stacked autoencoder based singular deep neural network is trained that can estimate value of each indicator variable element of $O$. For training and testing, the observation window $t_o$ was tuned from 1 to 7.5 seconds and the prediction window $t_p$ from 5 to 0.5 seconds. The resulting time windows ranged from 6 seconds to 8 seconds, in one example embodiment of the present disclosure.

At step 210 of the present disclosure, the one or more hardware processors 104 are configured to determine an outcome of a rule from a set of rules corresponding to a predicted maneuver from the set of predicted maneuvers of the target vehicle. The set of rules comprises: (a) occurrence of a safe event when the corresponding predicted maneuver is at least one of: (i) the Lane change to Left (LCL) and (ii) the Lane change to Right (LCR); (b) occurrence of a non-safe event suggesting applying brakes when the corresponding predicted maneuver is at least one of: (i) the Cut-in to Left (CTL) and (ii) the Cut-in to Right(CTR); and (c) computing the set of input features for the target vehicle with respect to each surrounding vehicle from the one or more surrounding vehicles for the observation time window when the corresponding predicted maneuver is the non-incident maneuver.

At step 212 of the present disclosure, the one or more hardware processors 104 are configured to predict a maneuver from the set of classes of maneuvers to be performed by the target vehicle with respect to each surrounding vehicle from the one or more surrounding vehicles within a prediction time window using the stacked autoencoder based singular deep neural network. If the predicted maneuver of the target vehicle with respect to host vehicle is a non- incident maneuver, then the set of input features of the target vehicle are computed with respect to each surrounding vehicle from the one or more surrounding vehicles. The set of input features are inputted to the stacked autoencoder based singular deep neural network and maneuvers of the target vehicle with respect to each surrounding vehicle are predicted.

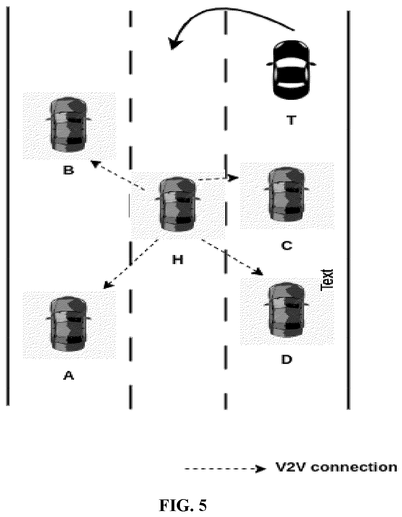

At step 214 of the present disclosure, the one or more hardware processors 104 are configured to communicate the predicted maneuver from the set of classes of maneuvers to be performed by the target vehicle with respect to each surrounding vehicle from the one or more surrounding vehicles from the autonomous vehicle to each surrounding vehicle using a vehicle-to-vehicle (V2V) connection. FIG. 5 depicts an example of communication using the vehicle-to-vehicle connection, according to some embodiments of the present disclosure. In FIG. 5, H is the host vehicle and T is the target vehicle. A, B, C, and D are other surrounding vehicles of the host H. the host vehicle is connected to all the surrounding vehicles via V2V connection. The method of the present disclosure first predicts maneuver of T with respect to H. If the maneuver is a cut-in maneuver, the host vehicle prepares for emergency breaking. If the predicted maneuver of the target vehicle with respect to host vehicle is a non- incident maneuver, then the set of input features of the target vehicle are computed with respect to each of the surrounding vehicle which are A, B, C, and D. The set of input features is inputted to the stacked autoencoder based singular deep neural network and maneuvers of the target vehicle with respect to each surrounding vehicle are predicted. The predictions are communicated to the corresponding surrounding vehicle through host vehicle's V2V connection, thus ensuring the safety of surrounding vehicles also.

**EXPERIIMENTAL RESULTS**

To validate the robustness of the system of present disclosure, the stacked autoencoder based singular deep neural network was trained and tested on a mix of HighD and NGSIM I-80 data. In addition, the trained stacked autoencoder based singular deep neural network then was tested with NGSIM US-101 data to validate if it can deal with data sources not used in training. Table 1 below shows comparison results of the system of the present disclosure with conventional approaches.

Table 1

| Approach | Observation window | Prediction window | Sample size | Number of maneuver classes | Published score | Score evaluated with dataset of the present disclosure |
|---|---|---|---|---|---|---|
| Method of present disclosure | 1s-7.5s | 0.5-5s | 20520 | 5 | | Recall = 95% for CTR, 91% for CTL, 99% for non-incident maneuver, 98% for LCR, 96% for LCL F1 = 96% for CTR, 88% for CTL, 99% for non-incident maneuver, 98% for LCR, 97% for LCL Overall Accuracy = 97% |
| Approach 1 | 5s | 1s | 300 | 2 | F1 = 62.28% | F1 = 62.4% |
| Approach 2 | 2s,5s | 1s,2s | 1043 | 2 | F1=80.5 2% for 2s observat ion and 1s predicti on window F1=52.8 4% for 5s observat ion and 2s predicti on window s | F1=79.6% for 2s observation and 1s prediction window F1=93.7% for 5s observation and 2s prediction windows |
| Approach 3 | 2s,4s | 1.8s | 1709 | 3 | F1 = 42% to 78% | F1 = 57% |

(continued)

| Approach | Observation window | Prediction window | Sample size | Number of maneuver classes | Published score | Score evaluated with dataset of the present disclosure |
|---|---|---|---|---|---|---|
| Approach 4 | 5s | 8.05s | 652 | 2 | Accuracy = 75% | Accuracy = 83% |

It is observed from Table 1 that the method of the present disclosure is host-centric, has most number of maneuver classes, exhibits highest scores, and show possibility to use long prediction windows. Approach 1 is simulated with limited cut-in samples, exhibit consistency lower scores than the method of the present disclosure. Approach 2 has offline recognition only and exhibits lower scores than worst case scores of the method of the present disclosure. Approach 3 is target-centric, exhibits low scores and limited classes, and class detection was performed only two at time. Approach 4 is target-centric, perform only left lane change predictions and for very narrow driving scenarios only. Thus, it evident from Table 1 that the present disclosure outperforms other approaches.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

## Claims

1. A processor implemented method (200), comprising steps of:

   perceiving (202), via one or more hardware processors, a surrounding environment of an autonomous vehicle to identify one or more surrounding vehicles and a target vehicle from the one or more surrounding vehicles;
   determining (204), via the one or more hardware processors, (i) a set of input features for the target vehicle with respect to the autonomous vehicle for an observation time window using a plurality of driving and sensor related information of the autonomous vehicle and the target vehicle, and (ii) a set of classes of maneuvers for the target vehicle with respect to the autonomous vehicle, wherein the set of classes of maneuvers comprises a non-incident maneuver defined by the target vehicle keeping a different lane than the autonomous vehicle, Lane change to Left (LCL), the Lane change to Right (LCR), Cut-in to Left (CTL) and Cut-in to Right (CTR), and wherein each class from the set of classes of maneuvers corresponds to a specific condition from a set of conditions;
   training (206), via the one or more hardware processors, a stacked autoencoder based singular deep neural network using the set of input features and the set of classes of maneuvers, wherein a stacked autoencoder is used to initialize a plurality of weights and a plurality of biases of each layer of the stacked autoencoder based singular deep neural network;
   predicting (208), via the one or more hardware processors, a maneuver from the set of classes of maneuvers to be performed by the target vehicle with respect to the autonomous vehicle within a prediction time window using the stacked autoencoder based singular deep neural network, wherein the prediction time window is indicative of a time interval between a time when the prediction is made and actual time of occurrence of the maneuver;
   determining in real time (210), via the one or more hardware processors, an outcome of a rule from a set of rules corresponding to a predicted maneuver from the set of predicted maneuvers of the target vehicle wherein the set of rules comprises:

   (a) occurrence of a safe event when the corresponding predicted maneuver is at least one of: (i) the Lane change to Left and (ii) the Lane change to Right;
   (b) occurrence of a non-safe event suggesting applying brakes when the corresponding predicted maneuver is at least one of: (i) the Cut-in to Left and (ii) the Cut-in to Right; and
   (c) computing the set of input features for the target vehicle with respect to each surrounding vehicle from the one or more surrounding vehicles for the observation time window when the corresponding predicted maneuver is the non-incident maneuver;

   predicting (212), via the one or more hardware processors, a maneuver from the set of classes of maneuvers to be performed by the target vehicle with respect to each surrounding vehicle from the one or more surrounding vehicles within a prediction time window using the stacked autoencoder based singular deep neural network; and
   communicating (214), via the one or more hardware processors, the predicted maneuver from the set of classes of maneuvers to be performed by the target vehicle with respect to each surrounding vehicle from the one or more surrounding vehicles from the autonomous vehicle to each surrounding vehicle using a vehicle-to-vehicle connection.

2. The processor implemented method (200) as claimed in claim 1, wherein the set of input features comprises range, range rate, transversal, speed, and yaw angle.

3. The processor implemented method (200) as claimed in claim 1, wherein the set of conditions for determining the set of classes of maneuvers for the autonomous vehicle and each surrounding vehicle includes:

   (a) selecting the Cut-in to Right maneuver when a lane identity value at a current time is greater than the lane identity value at a previous time and the lane identity value of the autonomous vehicles and the target vehicle are same at the current time and a parameter indicative of division of the range by the range rate is less than a predefined threshold value;
   (b) selecting the Lane change to Right maneuver when the lane identity value at the current time is greater than the lane identity value at the previous time and the lane identity value of the autonomous vehicles and the target vehicle are same at the current time and the parameter indicative of division of the range by the range rate exceeds the predefined threshold value;

(c) selecting the Cut-in to Left maneuver when the lane identity value at the current time is lesser than the lane identity value at the previous time and the lane identity value of the autonomous vehicles and the target vehicle are same at the current time and the parameter indicative of division of the range by the range rate is less than the predefined threshold value;

(d) selecting the Lane change to Left maneuver when the lane identity value at the current time is lesser than the lane identity value at the previous time and the lane identity value of the autonomous vehicles and the target vehicle are same at the current time and the parameter indicative of division of the range by the range rate exceeds the predefined threshold value; and

(e) selecting the non-incident maneuver when the lane identity of the autonomous vehicle is not equal to the lane identity of the target vehicle at the current time.

4. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

perceive a surrounding environment of an autonomous vehicle to identify one or more surrounding vehicles and a target vehicle from the one or more surrounding vehicles;

determine (i) a set of input features for the target vehicle with respect to the autonomous vehicle for an observation time window using a plurality of driving and sensor related information of the autonomous vehicle and the target vehicle, and (ii) a set of classes of maneuvers for the target vehicle with respect to the autonomous vehicle, wherein the set of classes of maneuvers comprises a non-incident maneuver defined by the target vehicle keeping a different lane than the autonomous vehicle, lane change to left, lane change to right, cut-in to left and cut-in to right, and wherein each class from the set of classes of maneuvers corresponds to a specific condition from a set of conditions;

train a stacked autoencoder based singular deep neural network using the set of input features and the set of classes of maneuvers, wherein a stacked autoencoder is used to initialize a plurality of weights and a plurality of biases of each layer of the stacked autoencoder based singular deep neural network;

predict a maneuver from the set of classes of maneuvers to be performed by the target vehicle with respect to the autonomous vehicle within a prediction time window using the stacked autoencoder based singular deep neural network, wherein the prediction time window is indicative of a time interval between time when the prediction is made and actual time of occurrence of the maneuver;

determine in real time, an outcome of a rule from a set of rules corresponding to a predicted maneuver from the set of predicted maneuvers of the target vehicle where in the set of rules comprises:

(a) occurrence of a safe event when the corresponding predicted maneuver is at least one of: (i) the Lane change to Left (LCL) and (ii) the Lane change to Right (LCR);

(b) occurrence of a non-safe event suggesting applying brakes when the corresponding predicted maneuver is at least one of: (i) the Cut-in to Left (CTL) and (ii) the Cut-in to Right(CTR); and

(c) computing the set of input features for the target vehicle with respect to each surrounding vehicle from the one or more surrounding vehicles for the observation time window when the corresponding predicted maneuver is the non-incident maneuver;

predict a maneuver from the set of classes of maneuvers to be performed by the target vehicle with respect to each surrounding vehicle from the one or more surrounding vehicles within a prediction time window using the stacked autoencoder based singular deep neural network; and

communicate the predicted maneuver from the set of classes of maneuvers to be performed by the target vehicle with respect to each surrounding vehicle from the one or more surrounding vehicles from the autonomous vehicle to each surrounding vehicle using a vehicle-to-vehicle connection.

5. The system (100) as claimed in claim 4, wherein the set of input features comprises range, range rate, transversal, speed, and yaw angle.

6. The system (100) as claimed in claim 4, wherein the set of conditions for determining the set of classes of maneuvers for the autonomous vehicle and each surrounding vehicle include:

(a) selecting the cut-in to right maneuver when a lane identity value at a current time is greater than the lane identity value at a previous time and the lane identity value of the autonomous vehicles and the target vehicle are same at the current time and a parameter indicative of division of the range by the range rate is less than a predefined threshold value;

(b) selecting the lane change to right maneuver when the lane identity value at the current time is greater than the lane identity value at the previous time and the lane identity value of the autonomous vehicles and the target vehicle are same at the current time and the parameter indicative of division of the range by the range rate exceeds the predefined threshold value;

(c) selecting the cut-in to left maneuver when the lane identity value at the current time is lesser than the lane identity value at the previous time and the lane identity value of the autonomous vehicles and the target vehicle are same at the current time and the parameter indicative of division of the range by the range rate is less than the predefined threshold value;

(d) selecting the lane change to left maneuver when the lane identity value at the current time is lesser than the lane identity value at the previous time and the lane identity value of the autonomous vehicles and the target vehicle are same at the current time and the parameter indicative of division of the range by the range rate exceeds the predefined threshold value; and

(e) selecting the non-incident maneuver when the lane identity of the autonomous vehicle is not equal to the lane identity of the target vehicle at the current time.

7. One or more non-transitory machine-readable information storage mediums comprising one or more instructions which when executed by one or more hardware processors cause:

perceiving a surrounding environment of an autonomous vehicle to identify one or more surrounding vehicles and a target vehicle from the one or more surrounding vehicles;

determining (i) a set of input features for the target vehicle with respect to the autonomous vehicle for an observation time window using a plurality of driving and sensor related information of the autonomous vehicle and the target vehicle, and (ii) a set of classes of maneuvers for the target vehicle with respect to the autonomous vehicle, wherein the set of classes of maneuvers comprises a non-incident maneuver defined by the target vehicle keeping a different lane than the autonomous vehicle, Lane change to Left (LCL), the Lane change to Right (LCR), Cut-in to Left (CTL) and Cut-in to Right (CTR), and wherein each class from the set of classes of maneuvers corresponds to a specific condition from a set of conditions;

training a stacked autoencoder based singular deep neural network using the set of input features and the set of classes of maneuvers, wherein a stacked autoencoder is used to initialize a plurality of weights and a plurality of biases of each layer of the stacked autoencoder based singular deep neural network;

predicting a maneuver from the set of classes of maneuvers to be performed by the target vehicle with respect to the autonomous vehicle within a prediction time window using the stacked autoencoder based singular deep neural network, wherein the prediction time window is indicative of a time interval between a time when the prediction is made and actual time of occurrence of the maneuver;

determining in real time an outcome of a rule from a set of rules corresponding to a predicted maneuver from the set of predicted maneuvers of the target vehicle wherein the set of rules comprises:

(a) occurrence of a safe event when the corresponding predicted maneuver is at least one of: (i) the Lane change to Left and (ii) the Lane change to Right;

(b) occurrence of a non-safe event suggesting applying brakes when the corresponding predicted maneuver is at least one of: (i) the Cut-in to Left and (ii) the Cut-in to Right; and

(c) computing the set of input features for the target vehicle with respect to each surrounding vehicle from the one or more surrounding vehicles for the observation time window when the corresponding predicted maneuver is the non-incident maneuver;

predicting a maneuver from the set of classes of maneuvers to be performed by the target vehicle with respect to each surrounding vehicle from the one or more surrounding vehicles within a prediction time window using the stacked autoencoder based singular deep neural network; and

communicating the predicted maneuver from the set of classes of maneuvers to be performed by the target vehicle with respect to each surrounding vehicle from the one or more surrounding vehicles from the autonomous vehicle to each surrounding vehicle using a vehicle-to-vehicle connection.

8. The one or more non-transitory machine-readable information storage mediums as claimed in claim 7, wherein the set of input features comprises range, range rate, transversal, speed, and yaw angle.

9. The one or more non-transitory machine-readable information storage mediums as claimed in claim 7, wherein the set of conditions for determining the set of classes of maneuvers for the autonomous vehicle and each surrounding vehicle includes:

(a) selecting the Cut-in to Right maneuver when a lane identity value at a current time is greater than the lane identity value at a previous time and the lane identity value of the autonomous vehicles and the target vehicle are same at the current time and a parameter indicative of division of the range by the range rate is less than a predefined threshold value;
(b) selecting the Lane change to Right maneuver when the lane identity value at the current time is greater than the lane identity value at the previous time and the lane identity value of the autonomous vehicles and the target vehicle are same at the current time and the parameter indicative of division of the range by the range rate exceeds the predefined threshold value;
(c) selecting the Cut-in to Left maneuver when the lane identity value at the current time is lesser than the lane identity value at the previous time and the lane identity value of the autonomous vehicles and the target vehicle are same at the current time and the parameter indicative of division of the range by the range rate is less than the predefined threshold value;
(d) selecting the Lane change to Left maneuver when the lane identity value at the current time is lesser than the lane identity value at the previous time and the lane identity value of the autonomous vehicles and the target vehicle are same at the current time and the parameter indicative of division of the range by the range rate exceeds the predefined threshold value; and
(e) selecting the non-incident maneuver when the lane identity of the autonomous vehicle is not equal to the lane identity of the target vehicle at the current time.

**Patentansprüche**

1. Prozessorimplementiertes Verfahren (200), umfassend die folgenden Schritte:

Wahrnehmen (202), über einen oder mehrere Hardwareprozessoren, einer Umgebung eines autonomen Fahrzeugs, um ein oder mehrere umliegende Fahrzeuge und ein Zielfahrzeug aus dem einen oder den mehreren umliegenden Fahrzeugen zu identifizieren;
Bestimmen (204), über den einen oder die mehreren Hardwareprozessoren, (i) eines Satzes von Eingabe-Merkmalen für das Zielfahrzeug in Bezug auf das autonome Fahrzeug für ein Beobachtungszeitfenster unter Verwendung einer Mehrzahl von fahr- und sensorbezogenen Informationen des autonomen Fahrzeugs und des Zielfahrzeugs, und (ii) eines Satzes von Klassen von Manövern für das Zielfahrzeug in Bezug auf das autonome Fahrzeug, wobei der Satz von Klassen von Manövern ein Nicht-Ereignis-Manöver umfasst, das dadurch definiert ist, dass das Zielfahrzeug eine andere Spur als das autonome Fahrzeug hält, Spurwechsel nach links ( Lane Change to Left, LCL), den Spurwechsel nach rechts (Lane Change to Right, LCR), Einscheren nach links (Cut-in to Left, CTL) und Einscheren nach rechts (Cut-in to Right, CTR), und wobei jede Klasse aus dem Satz von Klassen von Manövern einer spezifischen Bedingung aus einem Satz von Bedingungen entspricht;
Trainieren (206), über den einen oder die mehreren Hardwareprozessoren, eines gestapelten autoencoderbasierten singulären tiefen neuronalen Netzwerks unter Verwendung des Satzes von Eingabe-Merkmalen und des Satzes von Klassen von Manövern, wobei ein gestapelter Autoencoder verwendet wird, um eine Mehrzahl von Gewichtungen und eine Mehrzahl von Verzerrungen jeder Schicht des gestapelten autoencoderbasierten singulären tiefen neuronalen Netzwerks zu initialisieren;
Vorhersagen (208), über den einen oder die mehreren Hardwareprozessoren, eines Manövers aus dem Satz von Klassen von Manövern, das von dem Zielfahrzeug in Bezug auf das autonome Fahrzeug innerhalb eines Vorhersagezeitfensters unter Verwendung des gestapelten autoencoderbasierten singulären tiefen neuronalen Netzwerks durchzuführen ist, wobei das Vorhersagezeitfenster ein Zeitintervall zwischen einer Zeit, zu der die Vorhersage vorgenommen wird, und der tatsächlichen Zeit des Auftretens des Manövers anzeigt;
Bestimmen in Echtzeit (210), über den einen oder die mehreren Hardwareprozessoren, eines Ergebnisses einer Regel aus einem Satz von Regeln, die einem vorhergesagten Manöver aus dem Satz von vorhergesagten Manövern des Zielfahrzeugs entsprechen, wobei der Satz von Regeln umfasst:

(a) Auftreten eines sicheren Ereignisses, wenn das entsprechende vorhergesagte Manöver mindestens eines von Folgendem ist: (i) der Spurwechsel nach links und (ii) der Spurwechsel nach rechts;
(b) Auftreten eines nicht sicheren Ereignisses, das das Anwenden von Bremsen nahelegt, wenn das entsprechende vorhergesagte Manöver mindestens eines von Folgendem ist: (i) der Einscheren nach links und (ii) der Einscheren nach rechts; und

(c) Berechnen des Satzes von Eingabe-Merkmalen für das Zielfahrzeug in Bezug auf jedes umgebende Fahrzeug aus dem einen oder den mehreren umgebenden Fahrzeugen für das Beobachtungszeitfenster, wenn das entsprechende vorhergesagte Manöver das Nicht-Ereignis-Manöver ist;

Vorhersagen (212), über den einen oder die mehreren Hardwareprozessoren, eines Manövers aus dem Satz von Klassen von Manövern, das von dem Zielfahrzeug in Bezug auf jedes umgebende Fahrzeug aus dem einen oder den mehreren umgebenden Fahrzeugen innerhalb eines Vorhersagezeitfensters unter Verwendung des gestapelten autoencoderbasierten singulären tiefen neuronalen Netzwerks durchzuführen ist; und

Kommunizieren (214), über den einen oder die mehreren Hardwareprozessoren, des vorhergesagten Manövers aus dem Satz von Klassen von Manövern, das von dem Zielfahrzeug in Bezug auf jedes umgebende Fahrzeug aus dem einen oder den mehreren umgebenden Fahrzeugen durchzuführen ist, von dem autonomen Fahrzeug zu jedem umgebenden Fahrzeug unter Verwendung einer Fahrzeug-zu-Fahrzeug-Verbindung.

2. Prozessorimplementiertes Verfahren (200) nach Anspruch 1, wobei der Satz von Eingabe-Merkmalen Reichweite, Reichweitenrate, Quer-, Geschwindigkeits- und Gierwinkel umfasst.

3. Prozessorimplementiertes Verfahren (200) nach Anspruch 1, wobei der Satz von Bedingungen zum Bestimmen des Satzes von Klassen von Manövern für das autonome Fahrzeug und jedes umgebende Fahrzeug Folgendes beinhaltet:

(a) Auswählen des Einscheren nach Rechts-Manövers, wenn ein Spur-Identitätswert zu einem aktuellen Zeitpunkt größer ist als der Spur-Identitätswert zu einem vorherigen Zeitpunkt und der Spur-Identitätswert der autonomen Fahrzeuge und des Zielfahrzeugs zum aktuellen Zeitpunkt gleich sind und ein Parameter, der eine Division der Reichweite durch die Reichweitenrate anzeigt, kleiner ist als ein vordefinierter Schwellenwert;

(b) Auswählen des Spurwechsel nach Rechts-Manövers, wenn der Spur-Identitätswert zum aktuellen Zeitpunkt größer ist als der Spur-Identitätswert zum vorherigen Zeitpunkt und der Spur-Identitätswert der autonomen Fahrzeuge und des Zielfahrzeugs zum aktuellen Zeitpunkt gleich sind und der Parameter, der eine Division der Reichweite durch die Reichweitenrate anzeigt, den vordefinierten Schwellenwert überschreitet;

(c) Auswählen des Einscheren nach Links-Manövers, wenn der Spur-Identitätswert zum aktuellen Zeitpunkt kleiner ist als der Spur-Identitätswert zum vorherigen Zeitpunkt und der Spur-Identitätswert der autonomen Fahrzeuge und des Zielfahrzeugs zum aktuellen Zeitpunkt gleich sind und der Parameter, der eine Division der Reichweite durch die Reichweitenrate anzeigt, kleiner ist als der vordefinierte Schwellenwert;

(d) Auswählen des Spurwechsel nach Links-Manövers, wenn der Spur-Identitätswert zum aktuellen Zeitpunkt kleiner ist als der Spur-Identitätswert zum vorherigen Zeitpunkt und der Spur-Identitätswert der autonomen Fahrzeuge und des Zielfahrzeugs zum aktuellen Zeitpunkt gleich sind und der Parameter, der eine Division der Reichweite durch die Reichweitenrate anzeigt, den vordefinierten Schwellenwert überschreitet; und

(e) Auswählen des Nicht-Zwischenfall-Manövers, wenn die Spur-Identität des autonomen Fahrzeugs nicht gleich der Spur-Identität des Zielfahrzeugs zum aktuellen Zeitpunkt ist.

4. System (100), umfassend:

einen Speicher (102), der Anweisungen speichert;
eine oder mehrere Kommunikationsschnittstellen (106); und
einen oder mehrere Hardware-Prozessoren (104), die mit dem Speicher (102) über die eine oder die mehreren Kommunikationsschnittstellen (106) gekoppelt sind, wobei der eine oder die mehreren Hardware-Prozessoren (104) durch die Anweisungen konfiguriert sind zum:

Wahrnehmen einer Umgebung eines autonomen Fahrzeugs, um ein oder mehrere umliegende Fahrzeuge und ein Zielfahrzeug aus dem einen oder den mehreren umliegenden Fahrzeugen zu identifizieren;
Bestimmen (i) eines Satzes von Eingabe-Merkmalen für das Zielfahrzeug in Bezug auf das autonome Fahrzeug für ein Beobachtungszeitfenster unter Verwendung einer Mehrzahl von fahr- und sensorbezogenen Informationen des autonomen Fahrzeugs und des Zielfahrzeugs, und (ii) eines Satzes von Klassen von Manövern für das Zielfahrzeug in Bezug auf das autonome Fahrzeug, wobei der Satz von Klassen von Manövern ein Nicht-Ereignis-Manöver umfasst, das dadurch definiert ist, dass das Zielfahrzeug eine andere Spur als das autonome Fahrzeug hält, Spurwechsel nach links, Spurwechsel nach rechts, Einscheren nach links und Einscheren nach rechts, und wobei jede Klasse aus dem Satz von Klassen von Manövern einer spezifischen Bedingung aus einem Satz von Bedingungen entspricht;

Trainieren eines gestapelten autoencoderbasierten singulären tiefen neuronalen Netzwerks unter Verwendung des Satzes von Eingabe-Merkmalen und des Satzes von Klassen von Manövern, wobei ein gestapelter Autoencoder verwendet wird, um eine Mehrzahl von Gewichtungen und eine Mehrzahl von Verzerrungen jeder Schicht des gestapelten autoencoderbasierten singulären tiefen neuronalen Netzwerks zu initialisieren;

Vorhersagen eines Manövers aus dem Satz von Klassen von Manövern, das von dem Zielfahrzeug in Bezug auf das autonome Fahrzeug innerhalb eines Vorhersagezeitfensters unter Verwendung des gestapelten autoencoderbasierten singulären tiefen neuronalen Netzwerks durchzuführen ist, wobei das Vorhersagezeitfenster ein Zeitintervall zwischen der Zeit, zu der die Vorhersage vorgenommen wird, und der tatsächlichen Zeit des Auftretens des Manövers anzeigt;

Bestimmen in Echtzeit eines Ergebnisses einer Regel aus einem Satz von Regeln, die einem vorhergesagten Manöver aus dem Satz von vorhergesagten Manövern des Zielfahrzeugs entsprechen, wobei der Satz von Regeln umfasst:

(a) Auftreten eines sicheren Ereignisses, wenn das entsprechende vorhergesagte Manöver mindestens eines von Folgendem ist: (i) der Spurwechsel nach links (Lane Change to Left, LCL) und (ii) der Spurwechsel nach rechts (Lane Change to Right, LCR);

(b) Auftreten eines nicht sicheren Ereignisses, das das Anwenden von Bremsen nahelegt, wenn das entsprechende vorhergesagte Manöver mindestens eines von Folgendem ist: (i) das Einscheren nach links (Cut-in to Left, CTL) und (ii) das Einscheren nach rechts (Cut-in to Right, CTR); und

(c) Berechnen des Satzes von Eingabe-Merkmalen für das Zielfahrzeug in Bezug auf jedes umgebende Fahrzeug aus dem einen oder den mehreren umgebenden Fahrzeugen für das Beobachtungszeitfenster, wenn das entsprechende vorhergesagte Manöver das Nicht-Ereignis-Manöver ist;

Vorhersagen eines Manövers aus dem Satz von Klassen von Manövern, das von dem Zielfahrzeug in Bezug auf jedes umgebende Fahrzeug aus dem einen oder den mehreren umgebenden Fahrzeugen innerhalb eines Vorhersagezeitfensters unter Verwendung des gestapelten autoencoderbasierten singulären tiefen neuronalen Netzwerks durchzuführen ist; und

Kommunizieren des vorhergesagten Manövers aus dem Satz von Klassen von Manövern, das von dem Zielfahrzeug in Bezug auf jedes umgebende Fahrzeug aus dem einen oder den mehreren umgebenden Fahrzeugen durchzuführen ist, von dem autonomen Fahrzeug zu jedem umgebenden Fahrzeug unter Verwendung einer Fahrzeug-zu-Fahrzeug-Verbindung.

5. System (100) nach Anspruch 4, wobei der Satz von Eingabe-Merkmalen Reichweite, Reichweitenrate, Quer-, Geschwindigkeits- und Gierwinkel umfasst.

6. System (100) nach Anspruch 4, wobei der Satz von Bedingungen zum Bestimmen des Satzes von Klassen von Manövern für das autonome Fahrzeug und jedes umgebende Fahrzeug Folgendes beinhaltet:

(a) Auswählen des Einscheren nach Rechts-Manövers, wenn ein Spur-Identitätswert zu einem aktuellen Zeitpunkt größer ist als der Spur-Identitätswert zu einem vorherigen Zeitpunkt und der Spur-Identitätswert der autonomen Fahrzeuge und des Zielfahrzeugs zum aktuellen Zeitpunkt gleich sind und ein Parameter, der eine Division der Reichweite durch die Reichweitenrate anzeigt, kleiner ist als ein vordefinierter Schwellenwert;

(b) Auswählen des Spurwechsel- nach Rechts-Manövers, wenn der Spur-Identitätswert zum aktuellen Zeitpunkt größer ist als der Spur-Identitätswert zum vorherigen Zeitpunkt und der Spur-Identitätswert der autonomen Fahrzeuge und des Zielfahrzeugs zum aktuellen Zeitpunkt gleich sind und der Parameter, der eine Division der Reichweite durch die Reichweitenrate anzeigt, den vordefinierten Schwellenwert überschreitet;

(c) Auswählen des Einscheren nach Links-Manövers, wenn der Spur-Identitätswert zum aktuellen Zeitpunkt kleiner ist als der Spur-Identitätswert zum vorherigen Zeitpunkt und der Spur-Identitätswert der autonomen Fahrzeuge und des Zielfahrzeugs zum aktuellen Zeitpunkt gleich sind und der Parameter, der eine Division der Reichweite durch die Reichweitenrate anzeigt, kleiner ist als der vordefinierte Schwellenwert;

(d) Auswählen des Spurwechsel nach Links-Manövers, wenn der Spur-Identitätswert zum aktuellen Zeitpunkt kleiner ist als der Spur-Identitätswert zum vorherigen Zeitpunkt und der Spur-Identitätswert der autonomen Fahrzeuge und des Zielfahrzeugs zum aktuellen Zeitpunkt gleich sind und der Parameter, der eine Division der Reichweite durch die Reichweitenrate anzeigt, den vordefinierten Schwellenwert überschreitet; und

(e) Auswählen des Nicht-Zwischenfall-Manövers, wenn die Spur-Identität des autonomen Fahrzeugs nicht gleich der Spur-Identität des Zielfahrzeugs zum aktuellen Zeitpunkt ist.

7. Ein oder mehrere nichtflüchtige maschinenlesbare Informationsspeichermedien, umfassend eine oder mehrere Anweisungen, die bei Ausführung durch einen oder mehrere Hardware-Prozessoren bewirken:

Wahrnehmen einer Umgebung eines autonomen Fahrzeugs, um ein oder mehrere umliegende Fahrzeuge und ein Zielfahrzeug aus dem einen oder den mehreren umliegenden Fahrzeugen zu identifizieren;

Bestimmen (i) eines Satzes von Eingabe-Merkmalen für das Zielfahrzeug in Bezug auf das autonome Fahrzeug für ein Beobachtungszeitfenster unter Verwendung einer Mehrzahl von fahr- und sensorbezogenen Informationen des autonomen Fahrzeugs und des Zielfahrzeugs, und (ii) eines Satzes von Klassen von Manövern für das Zielfahrzeug in Bezug auf das autonome Fahrzeug, wobei der Satz von Klassen von Manövern ein Nicht-Ereignis-Manöver umfasst, das dadurch definiert ist, dass das Zielfahrzeug eine andere Spur als das autonome Fahrzeug hält, Spurwechsel nach links (Lane Change to Left, LCL), Spurwechsel nach rechts (Lane Change to Right, LCR), Einscheren nach links (Cut-in to Left, CTL) und Einscheren nach rechts (Cut-in to Right, CTR), und wobei jede Klasse aus dem Satz von Klassen von Manövern einer spezifischen Bedingung aus einem Satz von Bedingungen entspricht;

Trainieren eines gestapelten autoencoderbasierten singulären tiefen neuronalen Netzwerks unter Verwendung des Satzes von Eingabe-Merkmalen und des Satzes von Klassen von Manövern, wobei ein gestapelter Autoencoder verwendet wird, um eine Mehrzahl von Gewichtungen und eine Mehrzahl von Verzerrungen jeder Schicht des gestapelten autoencoderbasierten singulären tiefen neuronalen Netzwerks zu initialisieren;

Vorhersagen eines Manövers aus dem Satz von Klassen von Manövern, das von dem Zielfahrzeug in Bezug auf das autonome Fahrzeug innerhalb eines Vorhersagezeitfensters unter Verwendung des gestapelten autoencoderbasierten singulären tiefen neuronalen Netzwerks durchzuführen ist, wobei das Vorhersagezeitfenster ein Zeitintervall zwischen einer Zeit, zu der die Vorhersage vorgenommen wird, und der tatsächlichen Zeit des Auftretens des Manövers anzeigt;

Bestimmen in Echtzeit eines Ergebnisses einer Regel aus einem Satz von Regeln, die einem vorhergesagten Manöver aus dem Satz von vorhergesagten Manövern des Zielfahrzeugs entsprechen, wobei der Satz von Regeln umfasst:

(a) Auftreten eines sicheren Ereignisses, wenn das entsprechende vorhergesagte Manöver mindestens eines von Folgendem ist: (i) der Spurwechsel nach links und (ii) der Spurwechsel nach rechts;

(b) Auftreten eines nicht sicheren Ereignisses, das das Anwenden von Bremsen nahelegt, wenn das entsprechende vorhergesagte Manöver mindestens eines von Folgendem ist: (i) der Einscheren nach links und (ii) der Einscheren nach rechts; und

(c) Berechnen des Satzes von Eingabe-Merkmalen für das Zielfahrzeug in Bezug auf jedes umgebende Fahrzeug aus dem einen oder den mehreren umgebenden Fahrzeugen für das Beobachtungszeitfenster, wenn das entsprechende vorhergesagte Manöver das Nicht-Ereignis-Manöver ist;

Vorhersagen eines Manövers aus dem Satz von Klassen von Manövern, das von dem Zielfahrzeug in Bezug auf jedes umgebende Fahrzeug aus dem einen oder den mehreren umgebenden Fahrzeugen innerhalb eines Vorhersagezeitfensters unter Verwendung des gestapelten autoencoderbasierten singulären tiefen neuronalen Netzwerks durchzuführen ist; und

Kommunizieren des vorhergesagten Manövers aus dem Satz von Klassen von Manövern, das von dem Zielfahrzeug in Bezug auf jedes umgebende Fahrzeug aus dem einen oder den mehreren umgebenden Fahrzeugen durchzuführen ist, von dem autonomen Fahrzeug zu jedem umgebenden Fahrzeug unter Verwendung einer Fahrzeug-zu-Fahrzeug-Verbindung.

8. Ein oder mehrere nichtflüchtige maschinenlesbare Informationsspeichermedien nach Anspruch 7, wobei der Satz von Eingabe-Merkmalen Reichweite, Reichweitenrate, Quer-, Geschwindigkeits- und Gierwinkel umfasst.

9. Ein oder mehrere nichtflüchtige maschinenlesbare Informationsspeichermedien nach Anspruch 7, wobei der Satz von Bedingungen zum Bestimmen des Satzes von Klassen von Manövern für das autonome Fahrzeug und jedes umgebende Fahrzeug Folgendes beinhaltet:

(a) Auswählen des Einscheren nach Rechts-Manövers, wenn ein Spur-Identitätswert zu einem aktuellen Zeitpunkt größer ist als der Spur-Identitätswert zu einem vorherigen Zeitpunkt und der Spur-Identitätswert der autonomen Fahrzeuge und des Zielfahrzeugs zum aktuellen Zeitpunkt gleich sind und ein Parameter, der eine Division der Reichweite durch die Reichweitenrate anzeigt, kleiner ist als ein vordefinierter Schwellenwert;

(b) Auswählen des Spurwechsel nach Rechts-Manövers, wenn der Spur-Identitätswert zum aktuellen Zeitpunkt größer ist als der Spur-Identitätswert zum vorherigen Zeitpunkt und der Spur-Identitätswert der autonomen Fahrzeuge und des Zielfahrzeugs zum aktuellen Zeitpunkt gleich sind und der Parameter, der eine Division der Reichweite durch die Reichweitenrate anzeigt, den vordefinierten Schwellenwert überschreitet;

(c) Auswählen des Einscheren nach Links-Manövers, wenn der Spur-Identitätswert zum aktuellen Zeitpunkt kleiner ist als der Spur-Identitätswert zum vorherigen Zeitpunkt und der Spur-Identitätswert der autonomen Fahrzeuge und des Zielfahrzeugs zum aktuellen Zeitpunkt gleich sind und der Parameter, der eine Division der Reichweite durch die Reichweitenrate anzeigt, kleiner ist als der vordefinierte Schwellenwert;

(d) Auswählen des Spurwechsel nach Links-Manövers, wenn der Spur-Identitätswert zum aktuellen Zeitpunkt kleiner ist als der Spur-Identitätswert zum vorherigen Zeitpunkt und der Spur-Identitätswert der autonomen Fahrzeuge und des Zielfahrzeugs zum aktuellen Zeitpunkt gleich sind und der Parameter, der eine Division der Reichweite durch die Reichweitenrate anzeigt, den vordefinierten Schwellenwert überschreitet; und

(e) Auswählen des Nicht-Zwischenfall-Manövers, wenn die Spur-Identität des autonomen Fahrzeugs nicht gleich der Spur-Identität des Zielfahrzeugs zum aktuellen Zeitpunkt ist.

## Revendications

1. Procédé mis en œuvre par processeur (200), comprenant les étapes consistant à:

percevoir (202), via un ou plusieurs processeurs matériels, un environnement environnant d'un véhicule autonome pour identifier un ou plusieurs véhicules environnants et un véhicule cible à partir des un ou plusieurs véhicules environnants ;

déterminer (204), via les un ou plusieurs processeurs matériels, (i) un ensemble de caractéristiques d'entrée pour le véhicule cible par rapport au véhicule autonome pour une fenêtre temporelle d'observation en utilisant une pluralité d'informations liées à la conduite et au capteur du véhicule autonome et du véhicule cible, et (ii) un ensemble de classes de manoeuvres pour le véhicule cible par rapport au véhicule autonome, dans lequel l'ensemble de classes de manoeuvres comprend une manoeuvre non incidente définie par le véhicule cible gardant une voie différente du véhicule autonome, un changement de voie vers la gauche (LCL), un changement de voie vers la droite (LCR), une coupure vers la gauche (CTL) et une coupure vers la droite (CTR), et dans lequel chaque classe de l'ensemble de classes de manoeuvres correspond à une condition spécifique d'un ensemble de conditions ;

entraîner (206), via les un ou plusieurs processeurs matériels, un réseau neuronal profond singulier à base d'autocodeur empilé en utilisant l'ensemble de caractéristiques d'entrée et l'ensemble de classes de manoeuvres, dans lequel un autocodeur empilé est utilisé pour initialiser une pluralité de poids et une pluralité de biais de chaque couche du réseau neuronal profond singulier à base d'autocodeur empilé ;

prédire (208), via les un ou plusieurs processeurs matériels, une manoeuvre de l'ensemble de classes de manoeuvres à effectuer par le véhicule cible par rapport au véhicule autonome dans une fenêtre temporelle de prédiction en utilisant le réseau neuronal profond singulier à base d'autocodeur empilé, dans lequel la fenêtre temporelle de prédiction est indicative d'un intervalle de temps entre un moment où la prédiction est faite et un moment réel d'occurrence de la manoeuvre ;

déterminer en temps réel (210), via les un ou plusieurs processeurs matériels, un résultat d'une règle d'un ensemble de règles correspondant à une manoeuvre prédite de l'ensemble de manoeuvres prédites du véhicule cible dans lequel l'ensemble de règles comprend :

(a) l'occurrence d'un événement sûr lorsque la manoeuvre prédite correspondante est au moins l'un parmi : (i) le changement de voie vers la gauche et (ii) le changement de voie vers la droite ;

(b) l'occurrence d'un événement non sûr suggérant d'appliquer les freins lorsque la manoeuvre prédite correspondante est au moins l'un parmi : (i) la coupure vers la gauche et (ii) la coupure vers la droite ; et

(c) calculer l'ensemble de caractéristiques d'entrée pour le véhicule cible par rapport à chaque véhicule environnant des un ou plusieurs véhicules environnants pour la fenêtre temporelle d'observation lorsque la manoeuvre prédite correspondante est la manoeuvre non incidente ;

prédire (212), via les un ou plusieurs processeurs matériels, une manoeuvre de l'ensemble de classes de manoeuvres à effectuer par le véhicule cible par rapport à chaque véhicule environnant des un ou plusieurs véhicules environnants dans une fenêtre temporelle de prédiction en utilisant le réseau neuronal profond singulier à base d'autocodeur empilé ; et

communiquer (214), via les un ou plusieurs processeurs matériels, la manoeuvre prédite de l'ensemble de classes de manoeuvres à effectuer par le véhicule cible par rapport à chaque véhicule environnant des un ou plusieurs véhicules environnants du véhicule autonome à chaque véhicule environnant en utilisant une connexion de véhicule à véhicule.

2. Procédé mis en œuvre par processeur (200) selon la revendication 1, dans lequel l'ensemble de caractéristiques d'entrée comprend la portée, la vitesse de portée, la transversale, la vitesse et l'angle de lacet.

3. Procédé mis en œuvre par processeur (200) selon la revendication 1, dans lequel l'ensemble de conditions pour déterminer l'ensemble de classes de manoeuvres pour le véhicule autonome et chaque véhicule environnant inclut :

(a) sélectionner la manoeuvre de coupure à droite lorsqu'une valeur d'identité de voie à un instant actuel est supérieure à la valeur d'identité de voie à un instant précédent et que la valeur d'identité de voie des véhicules autonomes et du véhicule cible sont les mêmes à l'instant actuel et qu'un paramètre indicatif de la division de la portée par la vitesse de portée est inférieur à une valeur seuil prédéfinie ;
(b) sélectionner la manoeuvre de changement de voie à droite lorsque la valeur d'identité de voie à l'instant actuel est supérieure à la valeur d'identité de voie à l'instant précédent et que la valeur d'identité de voie des véhicules autonomes et du véhicule cible sont les mêmes à l'instant actuel et que le paramètre indicatif de la division de la portée par la vitesse de portée dépasse la valeur seuil prédéfinie ;
(c) sélectionner la manoeuvre de coupure à gauche lorsque la valeur d'identité de voie à l'instant actuel est inférieure à la valeur d'identité de voie à l'instant précédent et que la valeur d'identité de voie des véhicules autonomes et du véhicule cible sont les mêmes à l'instant actuel et que le paramètre indicatif de la division de la portée par la vitesse de portée est inférieur à la valeur seuil prédéfinie ;
(d) sélectionner la manoeuvre de changement de voie à gauche lorsque la valeur d'identité de voie à l'instant actuel est inférieure à la valeur d'identité de voie à l'instant précédent et que la valeur d'identité de voie des véhicules autonomes et du véhicule cible sont les mêmes à l'instant actuel et que le paramètre indicatif de la division de la portée par la vitesse de portée dépasse la valeur seuil prédéfinie ; et
(e) sélectionner la manoeuvre non incidente lorsque l'identité de voie du véhicule autonome n'est pas égale à l'identité de voie du véhicule cible à l'instant actuel.

4. Système (100), comprenant :

une mémoire (102) stockant des instructions ;
une ou plusieurs interfaces de communication (106) ; et
un ou plusieurs processeurs matériels (104) couplés à la mémoire (102) via les une ou plusieurs interfaces de communication (106), dans lequel les un ou plusieurs processeurs matériels (104) sont configurés par les instructions pour:

percevoir un environnement environnant d'un véhicule autonome pour identifier un ou plusieurs véhicules environnants et un véhicule cible à partir des un ou plusieurs véhicules environnants ;
déterminer (i) un ensemble de caractéristiques d'entrée pour le véhicule cible par rapport au véhicule autonome pour une fenêtre temporelle d'observation en utilisant une pluralité d'informations liées à la conduite et au capteur du véhicule autonome et du véhicule cible, et (ii) un ensemble de classes de manoeuvres pour le véhicule cible par rapport au véhicule autonome, dans lequel l'ensemble de classes de manoeuvres comprend une manoeuvre non incidente définie par le véhicule cible gardant une voie différente du véhicule autonome, un changement de voie vers la gauche, un changement de voie vers la droite, une coupure vers la gauche et une coupure vers la droite, et dans lequel chaque classe de l'ensemble de classes de manoeuvres correspond à une condition spécifique d'un ensemble de conditions ;
entraîner un réseau neuronal profond singulier à base d'autocodeur empilé en utilisant l'ensemble de caractéristiques d'entrée et l'ensemble de classes de manoeuvres, dans lequel un autocodeur empilé est utilisé pour initialiser une pluralité de poids et une pluralité de biais de chaque couche du réseau neuronal profond singulier à base d'autocodeur empilé ;
prédire une manoeuvre de l'ensemble de classes de manoeuvres à effectuer par le véhicule cible par rapport au véhicule autonome dans une fenêtre temporelle de prédiction en utilisant le réseau neuronal profond singulier à base d'autocodeur empilé, dans lequel la fenêtre temporelle de prédiction est indicative d'un intervalle de temps entre un moment où la prédiction est faite et un moment réel d'occurrence de la manoeuvre ;
déterminer en temps réel, un résultat d'une règle d'un ensemble de règles correspondant à une manoeuvre prédite de l'ensemble de manoeuvres prédites du véhicule cible dans lequel l'ensemble de règles comprend :

(a) l'occurrence d'un événement sûr lorsque la manoeuvre prédite correspondante est au moins l'un parmi : (i) le changement de voie vers la gauche (LCL) et (ii) le changement de voie vers la droite (LCR) ;

(b) l'occurrence d'un événement non sûr suggérant d'appliquer les freins lorsque la manoeuvre prédite correspondante est au moins l'un parmi : (i) la coupure vers la gauche (CTL) et (ii) la coupure vers la droite (CTR) ; et

(c) calculer l'ensemble de caractéristiques d'entrée pour le véhicule cible par rapport à chaque véhicule environnant des un ou plusieurs véhicules environnants pour la fenêtre temporelle d'observation lorsque la manoeuvre prédite correspondante est la manoeuvre non incidente ;

prédire une manoeuvre de l'ensemble de classes de manoeuvres à effectuer par le véhicule cible par rapport à chaque véhicule environnant des un ou plusieurs véhicules environnants dans une fenêtre temporelle de prédiction en utilisant le réseau neuronal profond singulier à base d'autocodeur empilé ; et

communiquer la manoeuvre prédite de l'ensemble de classes de manoeuvres à effectuer par le véhicule cible par rapport à chaque véhicule environnant des un ou plusieurs véhicules environnants du véhicule autonome à chaque véhicule environnant en utilisant une connexion de véhicule à véhicule.

5. Système (100) selon la revendication 4, dans lequel l'ensemble de caractéristiques d'entrée comprend la portée, la vitesse de portée, la transversale, la vitesse et l'angle de lacet.

6. Système (100) selon la revendication 4, dans lequel l'ensemble de conditions pour déterminer l'ensemble de classes de manoeuvres pour le véhicule autonome et chaque véhicule environnant inclut :

(a) sélectionner la manoeuvre de coupure à droite lorsqu'une valeur d'identité de voie à un instant actuel est supérieure à la valeur d'identité de voie à un instant précédent et que la valeur d'identité de voie des véhicules autonomes et du véhicule cible sont les mêmes à l'instant actuel et qu'un paramètre indicatif de la division de la portée par la vitesse de portée est inférieur à une valeur seuil prédéfinie ;

(b) sélectionner la manoeuvre de changement de voie à droite lorsque la valeur d'identité de voie à l'instant actuel est supérieure à la valeur d'identité de voie à l'instant précédent et que la valeur d'identité de voie des véhicules autonomes et du véhicule cible sont les mêmes à l'instant actuel et que le paramètre indicatif de la division de la portée par la vitesse de portée dépasse la valeur seuil prédéfinie ;

(c) sélectionner la manoeuvre de coupure à gauche lorsque la valeur d'identité de voie à l'instant actuel est inférieure à la valeur d'identité de voie à l'instant précédent et que la valeur d'identité de voie des véhicules autonomes et du véhicule cible sont les mêmes à l'instant actuel et que le paramètre indicatif de la division de la portée par la vitesse de portée est inférieur à la valeur seuil prédéfinie ;

(d) sélectionner la manoeuvre de changement de voie à gauche lorsque la valeur d'identité de voie à l'instant actuel est inférieure à la valeur d'identité de voie à l'instant précédent et que la valeur d'identité de voie des véhicules autonomes et du véhicule cible sont les mêmes à l'instant actuel et que le paramètre indicatif de la division de la portée par la vitesse de portée dépasse la valeur seuil prédéfinie ; et

(e) sélectionner la manoeuvre non incidente lorsque l'identité de voie du véhicule autonome n'est pas égale à l'identité de voie du véhicule cible à l'instant actuel.

7. Un ou plusieurs supports de stockage d'informations lisibles par machine non transitoires comprenant une ou plusieurs instructions qui, lorsqu'elles sont exécutées par un ou plusieurs processeurs matériels, amènent :

à percevoir un environnement environnant d'un véhicule autonome pour identifier un ou plusieurs véhicules environnants et un véhicule cible à partir des un ou plusieurs véhicules environnants ;

à déterminer (i) un ensemble de caractéristiques d'entrée pour le véhicule cible par rapport au véhicule autonome pour une fenêtre temporelle d'observation en utilisant une pluralité d'informations liées à la conduite et au capteur du véhicule autonome et du véhicule cible, et (ii) un ensemble de classes de manoeuvres pour le véhicule cible par rapport au véhicule autonome, dans lequel l'ensemble de classes de manoeuvres comprend une manoeuvre non incidente définie par le véhicule cible gardant une voie différente du véhicule autonome, un changement de voie vers la gauche (LCL), un changement de voie vers la droite (LCR), une coupure vers la gauche (CTL) et une coupure vers la droite (CTR), et dans lequel chaque classe de l'ensemble de classes de manoeuvres correspond à une condition spécifique d'un ensemble de conditions;

à entraîner un réseau neuronal profond singulier à base d'autocodeur empilé en utilisant l'ensemble de caractéristiques d'entrée et l'ensemble de classes de manoeuvres, dans lequel un autocodeur empilé est utilisé pour initialiser une pluralité de poids et une pluralité de biais de chaque couche du réseau neuronal profond singulier à base d'autocodeur empilé ;

à prédire une manoeuvre de l'ensemble de classes de manoeuvres à effectuer par le véhicule cible par rapport au véhicule autonome dans une fenêtre temporelle de prédiction en utilisant le réseau neuronal profond singulier à base d'autocodeur empilé, dans lequel la fenêtre temporelle de prédiction est indicative d'un intervalle de temps entre un moment où la prédiction est faite et un moment réel d'occurrence de la manoeuvre ;

à déterminer en temps réel un résultat d'une règle d'un ensemble de règles correspondant à une manoeuvre prédite de l'ensemble de manoeuvres prédites du véhicule cible dans lequel l'ensemble de règles comprend :

(a) l'occurrence d'un événement sûr lorsque la manoeuvre prédite correspondante est au moins l'un parmi : (i) le changement de voie vers la gauche et (ii) le changement de voie vers la droite ;

(b) l'occurrence d'un événement non sûr suggérant d'appliquer les freins lorsque la manoeuvre prédite correspondante est au moins l'un parmi : (i) la coupure vers la gauche et (ii) la coupure vers la droite ; et

(c) à calculer l'ensemble de caractéristiques d'entrée pour le véhicule cible par rapport à chaque véhicule environnant des un ou plusieurs véhicules environnants pour la fenêtre temporelle d'observation lorsque la manoeuvre prédite correspondante est la manoeuvre non incidente ;

à prédire une manoeuvre de l'ensemble de classes de manoeuvres à effectuer par le véhicule cible par rapport à chaque véhicule environnant des un ou plusieurs véhicules environnants dans une fenêtre temporelle de prédiction en utilisant le réseau neuronal profond singulier à base d'autocodeur empilé ; et

à communiquer la manoeuvre prédite de l'ensemble de classes de manoeuvres à effectuer par le véhicule cible par rapport à chaque véhicule environnant des un ou plusieurs véhicules environnants du véhicule autonome à chaque véhicule environnant en utilisant une connexion de véhicule à véhicule.

8. Un ou plusieurs supports de stockage d'informations lisibles par machine non transitoires selon la revendication 7, dans lesquels l'ensemble de caractéristiques d'entrée comprend la portée, la vitesse de portée, la transversale, la vitesse et l'angle de lacet.

9. Un ou plusieurs supports de stockage d'informations lisibles par machine non transitoires selon la revendication 7, dans lesquels l'ensemble de conditions pour déterminer l'ensemble de classes de manoeuvres pour le véhicule autonome et chaque véhicule environnant inclut :

(a) la sélection de la manoeuvre de coupure à droite lorsqu'une valeur d'identité de voie à un instant actuel est supérieure à la valeur d'identité de voie à un instant précédent et que la valeur d'identité de voie des véhicules autonomes et du véhicule cible sont les mêmes à l'instant actuel et qu'un paramètre indicatif de la division de la portée par la vitesse de portée est inférieur à une valeur seuil prédéfinie ;

(b) la sélection de la manoeuvre de changement de voie à droite lorsque la valeur d'identité de voie à l'instant actuel est supérieure à la valeur d'identité de voie à l'instant précédent et que la valeur d'identité de voie des véhicules autonomes et du véhicule cible sont les mêmes à l'instant actuel et que le paramètre indicatif de la division de la portée par la vitesse de portée dépasse la valeur seuil prédéfinie ;

(c) la sélection de la manoeuvre de coupure à gauche lorsque la valeur d'identité de voie à l'instant actuel est inférieure à la valeur d'identité de voie à l'instant précédent et que la valeur d'identité de voie des véhicules autonomes et du véhicule cible sont les mêmes à l'instant actuel et que le paramètre indicatif de la division de la portée par la vitesse de portée est inférieur à la valeur seuil prédéfinie ;

(d) la sélection de la manoeuvre de changement de voie à gauche lorsque la valeur d'identité de voie à l'instant actuel est inférieure à la valeur d'identité de voie à l'instant précédent et que la valeur d'identité de voie des véhicules autonomes et du véhicule cible sont les mêmes à l'instant actuel et que le paramètre indicatif de la division de la portée par la vitesse de portée dépasse la valeur seuil prédéfinie ; et

(e) la sélection de la manoeuvre non incidente lorsque l'identité de voie du véhicule autonome n'est pas égale à l'identité de voie du véhicule cible à l'instant actuel.

System **100**

**108**

Memory **102**

Modules **102a**

Repository **102b**

I/O interface(s) **106**

Hardware
processor(s) **104**

**FIG. 1**

Perceiving, via one or more hardware processors, a surrounding environment of an autonomous vehicle to identify one or more surrounding vehicles and a target vehicle from the one or more surrounding vehicles — 202

Determining, via the one or more hardware processors, (i) a set of input features for the target vehicle with respect to the autonomous vehicle for an observation time window using a plurality of driving and sensor related information of the autonomous vehicle and the target vehicle, and (ii) a set of classes of maneuvers for the target vehicle with respect to the autonomous vehicle, wherein the set of classes of maneuvers comprises a non-incident maneuver, Lane change to Left, Lane change to Right, Cut-in to Left and Cut-in to Right, and wherein each class from the set of classes of maneuvers corresponds to a specific condition from a set of conditions — 204

Training, via the one or more hardware processors, a stacked autoencoder based singular deep neural network using the set of input features and the set of classes of maneuvers, wherein a stacked autoencoder is used to initialize a plurality of weights and a plurality of biases of each layer of the stacked autoencoder based singular deep neural network — 206

Predicting, via the one or more hardware processors, a maneuver from the set of classes of maneuvers to be performed by the target vehicle with respect to the autonomous vehicle within a prediction time window using the stacked autoencoder based singular deep neural network, wherein the prediction time window is indicative of a time interval between time when the prediction is made and actual time of occurrence of the maneuver — 208

( A )

**FIG. 2A**

A

Determining in real time, via the one or more hardware processors, an outcome of a rule from a set of rules corresponding to a predicted maneuver from the set of predicted maneuvers of the target vehicle where in the set of rules comprises: (a) occurrence of a safe event when the corresponding predicted maneuver is at least one of: (i) the Lane change to Left (LCL) and (ii) the Lane change to Right (LCR); (b) occurrence of a non-safe event suggesting applying brakes when the corresponding predicted maneuver is at least one of: (i) the Cut-in to Left (CTL) and (ii) the Cut-in to Right(CTR); and (c) computing the set of input features for the target vehicle with respect to each surrounding vehicle from the one or more surrounding vehicles for the observation time window when the corresponding predicted maneuver is the non-incident maneuver — 210

Predicting, via the one or more hardware processors, a maneuver from the set of classes of maneuvers to be performed by the target vehicle with respect to each surrounding vehicle from the one or more surrounding vehicles within a prediction time window using the stacked autoencoder based singular deep neural network — 212

Communicating, via the one or more hardware processors, the predicted maneuver from the set of classes of maneuvers to be performed by the target vehicle with respect to each surrounding vehicle from the one or more surrounding vehicles from the autonomous vehicle to each surrounding vehicle using a vehicle-to-vehicle connection — 214

200

**FIG. 2B**

**Cut-in To left- Host**

**FIG. 3A**

**Cut-in To Right- Host**

**FIG. 3B**

**Lane change To Right- Host**

**FIG. 3C**

**Lane change To left- Host**

**FIG. 3D**

**Non-incident - Host**

**FIG. 3E**

Cut-in To Left - Surrounding

**FIG. 3F**

Cut-in to Right - Surrounding

**FIG. 3G**

Lane Change To Left - Surrounding

FIG. 3H

Lane Change To Right - Surrounding

FIG. 3I

**FIG. 4**

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4009300 A